# FASCICULE DE BREVET EUROPEEN

(11) **EP 2 957 200 B1**
(45) Date de publication et mention de la délivrance du brevet: **10.10.2018**
(21) Numéro de dépôt: 14178646.7
(22) Date de dépôt: 25.07.2014
(51) Int. Cl.: A47J 43/046, A47J 43/07, A47J 43/08, B26D 1/43, B26D 3/28, B26D 7/06

(54) **Dispositif de préparation d'aliments comprenant au moins deux outils de travail**
Lebensmittelzubereitungsvorrichtung, die mindestens zwei Arbeitsinstrumente umfasst
Food preparation device including at least two working tools

(30) Priorité: 19.06.2014 FR 1455672
(43) Date de publication de la demande: 23.12.2015
(73) Titulaire: SEB S.A., 69130 Ecully (FR)
(72) Inventeur: Masson, Antony, 69009 Lyon (FR); Bourgeois-Jacquet, Jean-Marie, 21800 Sennecey-les-Dijon (FR)
(74) Mandataire: Cémeli, Eric Philippe Laurent

(56) Documents cités:
- DE-A1-102010 026 974
- GB-A- 2 448 173
- US-A1- 2012 048 977

## Description

La présente invention concerne de manière générale un dispositif de préparation d'aliments multifonctions, du type des appareils ou des accessoires de préparation culinaire comprenant au moins deux outils de travail amovibles pour travailler des aliments, en les coupant ou en les râpant par exemple.

Il est connu dans l'art antérieur de tels appareils de préparation culinaire, comme celui divulgué dans le document WO2010106284 par exemple. En contrepartie, ce système présente notamment l'inconvénient d'être compliqué au niveau du conduit de guidage, qui doit être pivotant pour pouvoir occuper une première position dans laquelle son axe d'alimentation est colinéaire avec l'axe de rotation de l'outil de travail, ou une deuxième position dans laquelle son axe d'alimentation est excentré radialement par rapport à l'axe de rotation de l'outil de travail. En effet, d'une part l'appareil peut être utilisé avec un premier outil de travail conique, les aliments doivent être introduits dans l'espace de travail selon une première direction colinéaire à l'axe de rotation. D'autre part, l'appareil peut être utilisé avec un deuxième outil de travail qui est un disque, les aliments dans ce cas doivent être alimentés selon une deuxième direction qui n'est pas colinéaire à l'axe de rotation. En conséquence, le conduit de guidage des aliments doit être articulé pour être mis dans la bonne position avant utilisation du premier ou du deuxième outil de travail. Il en résulte une construction et une ergonomie d'utilisation complexes.

Enfin, on peut mentionner que l'appareil décrit par ce document est complexe à fabriquer, en raison des nombreuses contraintes à prendre en compte. Tout d'abord, le boîtier de cet appareil de préparation culinaire forme un col de cygne, c'est-à-dire qu'un évidement pour recueillir les aliments travaillés est nécessaire entre la base du boîtier et la couronne supérieure où sont installés les outils de travail. Il en résulte un porte à faux important qui génère des contraintes mécaniques élevées lorsque l'utilisateur pousse les aliments vers l'outil de coupe, à travers le conduit de guidage. En conséquence, la structure interne du boîtier doit être prévue pour résister à ces contraintes et le coût de fabrication ainsi que le poids de l'appareil de préparation culinaire seront impactés.

Un dispositif de préparation d'aliments selon le préambule de la revendication 1 est connu du document WO2010106284.

Un but de la présente invention est de répondre aux inconvénients des documents de l'art antérieur mentionnés ci-dessus et en particulier, tout d'abord, de proposer un dispositif de préparation d'aliments multifonctions de construction et d'ergonomie d'utilisation simples.

Ce but est atteint avec un dispositif de préparation d'aliments selon les caractéristiques de la revendication 1.

L'alimentation du dispositif de préparation d'aliments selon cette mise en oeuvre est simplifiée car la pièce d'alimentation comprend deux conduits de guidage indépendants qui conduisent les aliments à travailler vers le même espace de travail. Le premier conduit de guidage axial s'étendant autour de l'axe de rotation permet de travailler les aliments autour de l'axe de rotation. Le deuxième conduit de guidage non-axial s'étendant hors de l'axe de rotation permet de travailler les aliments latéralement par rapport à l'axe de rotation. En conséquence, l'utilisateur n'a aucune mise en opération préliminaire à effectuer avant de pouvoir introduire les aliments. D'autre part, la structure du dispositif de préparation d'aliments est simplifiée, car tout en ayant deux types différents d'outil de travail, il n'y a qu'une pièce d'alimentation, et qui est exempte de mécanisme ou d'articulation.

Avantageusement, chaque outil de travail comporte une couronne périphérique agencée pour coopérer avec un entraîneur appartenant au dispositif d'entraînement, lorsque ledit outil de travail est mis en place dans l'espace de travail, afin d'entraîner en rotation ledit outil de travail. L'axe de rotation est donc dégagé, car l'entraînement est périphérique. L'entraîneur peut notamment consister en un anneau portant la couronne périphérique, ou en un pignon coopérant avec une denture de la couronne périphérique. Avantageusement un même entraîneur peut être utilisé pour entraîner les couronnes périphériques des différents outils de travail.

Selon une forme de réalisation, le premier outil de travail est conique avec une partie concave, le premier outil de travail comprenant au moins une lame de coupe agencée dans la partie concave, la lame de coupe étant agencée pour couper en spirale des aliments lorsqu'ils sont introduits par le premier conduit de guidage dans l'espace de travail et poussés dans la partie concave du premier outil de travail, lorsque le premier outil de travail est mis en place dans l'espace de travail. Ce premier type d'outil de travail fonctionne sur le même principe qu'un taille crayon et offre la possibilité de travailler les aliments pour obtenir des bandes telles que des tagliatelles ou des spaghettis de légumes. Si désiré la lame de coupe peut être associée à une ou plusieurs lames complémentaires s'élevant au dessus de la lame de coupe, pour fendre les aliments découpés, afin d'obtenir des bandes de largeur plus réduite.

Avantageusement alors, le premier outil de travail conique présente une base formant la couronne périphérique.

Selon une forme de réalisation, le deuxième outil de travail est tronconique, le deuxième outil de travail comprenant au moins une portion de coupe agencée sur une génératrice d'un tronc de cône, pour travailler des aliments lorsqu'ils sont introduits par le deuxième conduit de guidage dans l'espace de travail, lorsque le deuxième outil de travail est mis en place dans l'espace de travail. Un tel outil de travail tronconique peut par exemple être un outil de coupe en tranches ou en rondelles, ou un outil de râpage, notamment pour les aliments non friables.

Avantageusement alors, le deuxième conduit de guidage est agencé pour guider les aliments à travailler selon une direction perpendiculaire à une génératrice du deuxième outil de travail tronconique située en regard du deuxième conduit de guidage. Cette disposition permet de mieux plaquer les aliments sur le deuxième outil de travail tronconique, ce qui permet un meilleur débit de transformation des aliments, voire une meilleure qualité de coupe.

Avantageusement encore, le deuxième outil de travail tronconique présente une première base et une deuxième base d'un diamètre supérieur à un diamètre de la première base, la deuxième base comprenant la couronne périphérique. Cette disposition permet de faciliter l'évacuation des aliments transformés.

Avantageusement alors, la couronne périphérique du deuxième outil de travail tronconique est identique à la couronne périphérique du premier outil de travail conique. Cette disposition permet d'utiliser un même entraîneur pour les deux outils de travail.

Avantageusement encore, le deuxième conduit de guidage est agencé pour guider des aliments vers l'espace de travail selon une deuxième direction présentant au moins une composante normale à l'axe de rotation. Une telle réalisation est bien adaptée à l'utilisation du deuxième outil de travail tronconique.

En alternative, le deuxième outil de travail n'est toutefois pas nécessairement tronconique. Le deuxième outil de travail peut notamment former un disque ou un tambour cylindrique.

Avantageusement encore,
- le boîtier comprend une interface de fixation de la pièce d'alimentation,
- la pièce d'alimentation est agencée pour être montée sur l'interface de manière amovible,
- et l'interface est agencée autour d'un orifice ménagé dans une paroi du boîtier pour faire passer au travers de la paroi les aliments introduits dans la pièce d'alimentation et/ou transformés par l'outil de travail.
Grâce à l'entraînement périphérique, l'axe de rotation est dégagé et les aliments travaillés passent au travers de l'orifice pour être travaillés et déversés dans un récipient, ou directement dans une assiette pour être consommés.

Avantageusement alors, chaque outil de travail est agencé pour être pris en sandwich entre l'interface et la pièce d'alimentation, lorsque la pièce d'alimentation est montée sur l'interface. Une telle disposition permet d'obtenir un guidage et un maintien satisfaisants de l'outil de travail, notamment pour les outils de travail tronconiques ou cylindriques, sans nécessiter un verrouillage de l'outil de travail sur l'entraîneur.

Avantageusement encore, le dispositif de préparation d'aliments comprend une bavette de déversement agencée en aval de l'orifice. Cette mise en oeuvre facilite le déversement directement au milieu d'un récipient de réception, ce qui améliore l'ergonomie d'utilisation.

Avantageusement encore, le boîtier présente une portion d'appui agencée pour définir un plan support sur lequel le dispositif de préparation d'aliments peut reposer. En alternative, le dispositif de préparation d'aliments pourrait notamment être prévu pour être tenu à la main.

Avantageusement alors, l'axe de rotation forme un angle α avec une droite d'intersection du plan support avec un autre plan perpendiculaire au plan support et comprenant l'axe de rotation, l'angle α étant compris dans une gamme de valeurs allant de 0° à 20°. Le dispositif de préparation d'aliments présente donc un axe de rotation des outils de travail orienté entre 0° et 20° par rapport au plan support. En d'autres termes, la paroi qui reçoit les outils de travail peut être essentiellement perpendiculaire au plan support. En conséquence, il n'y a pas besoin de prévoir de col de cygne au niveau d'un boîtier du dispositif de préparation d'aliments portant la pièce d'alimentation, car l'axe de rotation est essentiellement horizontal et les aliments travaillés peuvent être déversés vers un récipient sans avoir à ménager d'évidement dans le boîtier. Il n'y a pas de partie en porte à faux, ce qui réduit les contraintes pouvant être exercées par l'utilisateur, et la structure interne du boîtier peut être simplifiée.

Avantageusement alors, le deuxième outil de travail tronconique présente un angle de cône dont la valeur est le double de la valeur de l'angle a. Cette mise en oeuvre permet d'obtenir que l'une des génératrices du deuxième outil de travail tronconique soit parallèle au plan support.

Avantageusement encore, la portion d'appui définit un empattement, et le dispositif de préparation d'aliments comprend un poussoir agencé pour permettre à un utilisateur de pousser les aliments à travailler dans le deuxième conduit de guidage vers le deuxième outil de travail selon un axe de poussée, l'axe de poussée présentant un point d'intersection avec le plan support situé dans l'empattement. Comme la direction de poussée passe entre les appuis du dispositif de préparation d'aliments, il n'y a pas de couple de renversement lors de l'utilisation, et la stabilité est encore améliorée.

Selon un mode de réalisation, le boîtier loge un moteur électrique agencé pour entraîner en rotation l'outil de travail mis en place dans l'espace de travail, par l'intermédiaire du dispositif d'entraînement. Le dispositif de préparation d'aliments forme alors un appareil électrique de préparation culinaire.

Avantageusement alors, le boîtier comprend un bouton de commande agencé pour mettre le moteur électrique en fonctionnement, le bouton de commande étant du type à appui maintenu selon une direction d'appui, la direction d'appui présentant un point d'intersection avec le plan support situé dans l'empattement. Comme la direction d'appui passe entre les appuis du dispositif de préparation d'aliments, il n'y a pas de couple de renversement lors de l'utilisation, et la stabilité est encore améliorée.

En alternative, le dispositif d'entraînement peut notamment présenter un organe de transmission prévu pour être entraîné en rotation par un boîtier motorisé, l'organe de transmission entraînant l'entraîneur. Le dispositif de préparation d'aliments forme alors un accessoire pour ledit boîtier motorisé.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue en perspective d'un exemple de réalisation d'un dispositif de préparation d'aliments selon la présente invention, utilisant un outil de travail ;
- la figure 2 représente une autre vue en perspective du dispositif de préparation d'aliments de la figure 1, utilisant un autre outil de travail.

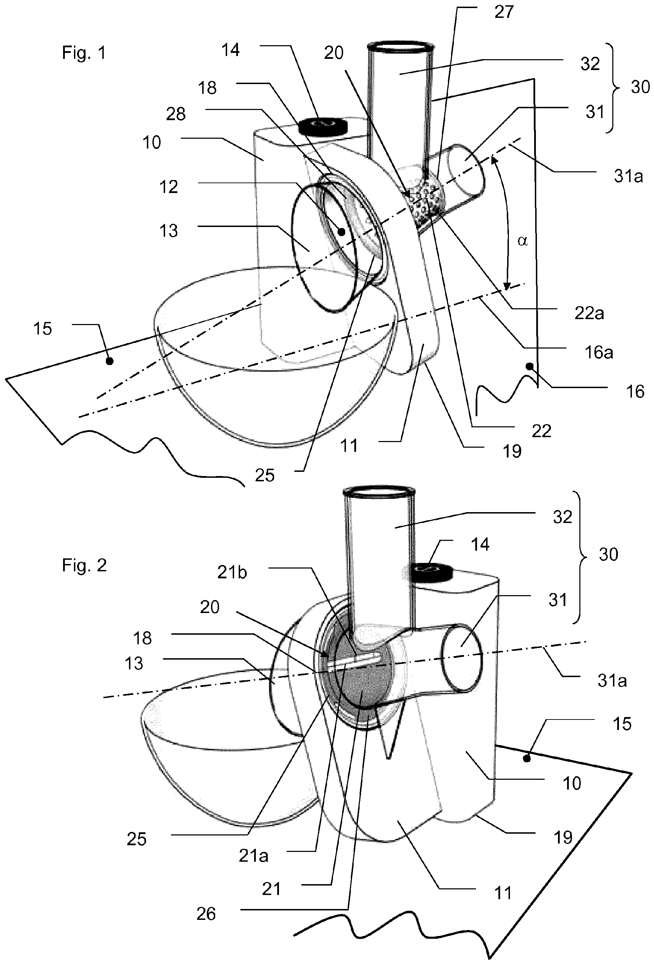

Les figures 1 et 2 représentent un dispositif de préparation d'aliments selon la présente invention, du type appareil électrique de préparation culinaire à outils de travail interchangeables pour travailler les aliments de différentes façons, et en particulier pour couper, trancher ou râper des aliments à travailler tels que des légumes ou du fromage.

Le dispositif de préparation d'aliments comprend un boîtier 10 présentant un dispositif d'entraînement (non représenté sur les figures). Le boîtier 10 comprend une portion d'appui 19 qui définit un plan support 15 pour pouvoir reposer de manière stable sur un plan de travail ou sur une table par exemple.

Le dispositif de préparation d'aliments comprend deux outils de travail 20 amovibles, chaque outil de travail 20 étant agencé pour être entraîné en rotation par le dispositif d'entraînement autour d'un axe de rotation 31a, lorsque mis en place dans un espace de travail.

Les outils de travail 20 comprennent un premier outil de travail 21 représenté sur la figure 2 et un deuxième outil de travail 22 représenté sur la figure 1.

Chaque outil de travail 20 comporte une couronne périphérique 25 agencée pour coopérer avec un entraîneur (non représenté sur les figures) appartenant au dispositif d'entraînement, lorsque ledit outil de travail 20 est mis en place dans l'espace de travail, afin d'entraîner en rotation ledit outil de travail 20.

Tel que représenté sur la figure 1, le deuxième outil de travail 22 est un outil servant à râper des aliments et présente une forme tronconique. De tels outils de travail 20 tronconiques peuvent être conçus pour râper, comme dans le cas du deuxième outil de travail 22 représenté, mais on peut envisager d'avoir également un outil de travail 20 de cette forme tronconique avec une lame de coupe pour trancher en rondelles les aliments à travailler. On rappelle qu'une forme tronconique est obtenue par l'intersection d'un cône avec deux plans, ici parallèles.

Le deuxième outil de travail 22 tronconique présente une première base 27 de petit diamètre et une deuxième base 28 de grand diamètre. Ainsi le diamètre de la deuxième base 28 est supérieur au diamètre de la première base 27.

Le dispositif de préparation d'aliments comprend une pièce d'alimentation 30 montée sur le boîtier 10. Un des outils de travail 20 est installé dans l'espace de travail défini au moins partiellement par la pièce d'alimentation 30 et le boîtier 10.

Le boîtier 10 loge un moteur électrique (non représenté sur les figures) agencé pour entraîner en rotation l'outil de travail 20 mis en place dans l'espace de travail par l'intermédiaire du dispositif d'entraînement.

La pièce d'alimentation 30 prend l'outil de travail 20 en sandwich au niveau de la deuxième base 28 de grand diamètre. La deuxième base 28 comprend la couronne périphérique 25 d'entraînement qui s'engage avec l'entraîneur (non représenté sur les figures) du dispositif de préparation d'aliments.

La pièce d'alimentation 30 est fixée sur une paroi 11 du boîtier 10 de manière amovible (par une interface à baïonnette et quart de tour par exemple), et prend l'outil de travail 20 en sandwich entre la paroi 11 et la pièce d'alimentation 30. La paroi 11 s'étend latéralement par rapport à une partie principale du boîtier 10 logeant le moteur électrique. La paroi 11 définit une partie de la portion d'appui 19. La portion d'appui 19 présente ainsi une configuration en T, la paroi 11 rejoignant la partie principale du boîtier à distance de ses extrémités.

Le boîtier 10 comprend ainsi une interface 18 de fixation de la pièce d'alimentation 30. La pièce d'alimentation 30 est agencée pour être montée sur l'interface 18 de manière amovible. Chaque outil de travail 20 est agencé pour être pris en sandwich entre l'interface 18 et la pièce d'alimentation 30, lorsque la pièce d'alimentation 30 est montée sur l'interface 18.

La pièce d'alimentation 30 comprend un premier conduit de guidage 31 et un deuxième conduit de guidage 32.

Le premier conduit de guidage 31 est axial. En d'autres termes, le premier conduit de guidage loge l'axe de rotation 31a. De manière préférée, son axe est confondu avec l'axe de rotation 31a. Dans l'exemple de réalisation illustré sur les figures, le premier conduit de guidage 31 présente une ouverture d'admission latérale pour l'introduction des aliments à transformer.

Le deuxième conduit de guidage 32 est non-axial. En d'autres termes, le deuxième conduit de guidage 32 s'étend hors de l'axe de rotation 31a. Dans l'exemple de réalisation illustré sur les figures, le deuxième conduit de guidage 32 présente une ouverture d'admission supérieure pour l'introduction des aliments à transformer.

Le deuxième outil de travail 22 tronconique comprend au moins une portion de coupe 22a agencée sur une génératrice d'un tronc de cône, pour travailler des aliments lorsqu'ils sont introduits par le deuxième conduit de guidage 32 dans l'espace de travail, lorsque le deuxième outil de travail 22 est mis en place dans l'espace de travail.

Dans la mise en oeuvre représentée figure 1, l'utilisateur fera passer les aliments à travailler par le deuxième conduit de guidage 32 pour qu'ils soient râpés par les multiples lames de coupe agencées sur la surface du tronc de cône du deuxième outil de travail 22.

Le boîtier 10 du dispositif de préparation d'aliments renferme le moteur électrique qui est relié à l'entraîneur, pour entraîner l'outil de travail 20 en rotation autour de l'axe de rotation 31a. L'entraînement est donc périphérique, par le biais de la couronne périphérique 25 de l'outil de travail 20. La paroi 11 du boîtier 10 comprend également un orifice 12 au niveau de l'interface de fixation de la pièce d'alimentation 30, et cette mise en oeuvre, en combinaison avec l'entraînement périphérique de l'outil de travail 20 permet de faire passer les aliments au travers de la paroi 11 pour pouvoir les déverser directement dans un récipient de réception, comme représenté sur la figure 1. Ainsi l'interface 18 est agencée autour de l'orifice 12 ménagé dans la paroi 11 pour faire passer au travers de la paroi 11 les aliments introduits dans la pièce d'alimentation 30 et/ou transformés par l'outil de travail 20.

Le dispositif de préparation d'aliments comprend de plus une bavette de déversement 13 pour améliorer le déversement et diriger les aliments travaillés vers le centre du récipient de réception. La bavette de déversement 13 est agencée en aval de l'orifice 12.

Afin de simplifier la structure interne du boîtier 10, l'axe de rotation 31a est essentiellement horizontal, pour éviter une structure en porte à faux, et/ou un boîtier 10 en col de cygne. En d'autres termes, si on représente un plan 16 contenant l'axe de rotation 31a et perpendiculaire au plan support 15, et une droite d'intersection 16a entre ces deux plans 15 et 16, l'angle α entre l'axe de rotation 31a et la droite d'intersection 16a est compris dans une gamme de valeurs allant de 0° à 20°. Cette mise en oeuvre permet de simplifier la structure interne du boîtier 10 (pas de porte à faux), et améliore également la stabilité lors de l'utilisation, car l'effort de poussée des aliments par le deuxième conduit de guidage 32 est essentiellement vertical.

En effet, le deuxième outil de travail 22 présente un angle de cône prédéterminé et de manière préférentielle, l'angle α entre l'axe de rotation 31a et la droite d'intersection 16a est égal à la moitié de l'angle de cône du deuxième outil de travail 22. Ainsi, le deuxième outil de travail 22 présente, lorsqu'il est monté sur le boîtier 10, une génératrice supérieure (celle en regard avec le deuxième conduit de guidage 32) parallèle au plan support 15. Le deuxième conduit de guidage 32 peut être agencé pour guider les aliments à travailler selon une direction perpendiculaire à une génératrice du deuxième outil de travail 22 tronconique située en regard du deuxième conduit de guidage 32. Ainsi, le deuxième conduit de guidage 32 sera perpendiculaire au plan support 15, ou autrement dit vertical, si le dispositif de préparation d'aliments repose sur un plan de travail horizontal. Une telle mise en oeuvre améliore notablement la stabilité du dispositif de préparation d'aliments lorsqu'un utilisateur pousse des aliments à travailler dans le deuxième conduit de guidage 32.

Enfin, le boîtier 10 comprend un bouton de commande 14 agencé pour mettre le moteur électrique en fonctionnement. Le bouton de commande 14 est agencé sur une face supérieure du boîtier 10. Pour des raisons de sécurité, on peut envisager d'utiliser un bouton de commande 14 à appui maintenu, pour forcer l'utilisateur à appuyer sur le bouton de commande 14 tant qu'il désire que l'outil de travail 20 tourne. Selon la mise en oeuvre représentée, la direction d'appui sur le bouton de commande 14 est verticale, ce qui améliore la stabilité d'utilisation. De plus, la direction d'appui présente un point d'intersection avec le plan support 15 situé dans l'empattement défini par la portion d'appui 19.

Le dispositif de préparation d'aliments peut comprendre un poussoir (non représenté sur les figures) agencé pour permettre à un utilisateur de pousser les aliments à travailler dans le deuxième conduit de guidage 32 vers le deuxième outil de travail 22 selon un axe de poussée. L'axe de poussée présente un point d'intersection avec le plan support 15 situé dans l'empattement, ce qui améliore également la stabilité d'utilisation.

La figure 2 représente une autre vue en perspective de l'appareil de préparation culinaire de la figure 1, avec le premier outil de travail 21 mis en place dans l'espace de travail. Le premier outil de travail 21 s'étend principalement du côté de l'orifice 12 traversant la paroi 11 du boîtier 10.

Tel que représenté sur la figure 2, le premier outil de travail 21 est conique avec une partie concave 21a s'étendant en direction de la bavette de déversement 13 à l'opposé de la pièce d'alimentation 30. Le premier outil de travail 21 comprend au moins une lame de coupe 21b agencée dans la partie concave 21a. La lame de coupe 21b est agencée pour couper en spirale des aliments lorsqu'ils sont introduits par le premier conduit de guidage 31 dans l'espace de travail et poussés dans la partie concave 21a du premier outil de travail 21, lorsque le premier outil de travail 21 est mis en place dans l'espace de travail. Le premier outil de travail 21 conique présente une base 26 formant la couronne périphérique 25.

Le premier conduit de guidage 31 est colinéaire avec l'axe de rotation 31a, alors que le deuxième conduit de guidage 32 est essentiellement perpendiculaire au premier conduit de guidage 31, mais tous deux sont agencés pour guider les aliments à travailler dans un même espace de travail où on installe soit le premier outil de travail 21 ou le deuxième outil de travail 22. Cette mise en oeuvre de la pièce d'alimentation 30 est simple et permet d'éviter d'avoir recours à un mécanisme articulé ou démontable d'un conduit d'alimentation qui devrait pouvoir occuper deux positions différentes. En d'autres termes, implanter dans la pièce d'alimentation 30 un premier et un deuxième conduit de guidage 31 et 32 supprime tous les mécanismes connus jusqu'alors, pour utiliser avec le même appareil de préparation culinaire des outils de travail coniques, ou tronconiques.

Ainsi le premier conduit de guidage 31 axial est agencé pour guider des aliments vers l'espace de travail selon une première direction le long de l'axe de rotation 31a, le premier outil de travail 21 est agencé pour travailler selon les aliments introduits dans le premier conduit de guidage 31, le deuxième conduit de guidage 32 non-axial est agencé pour guider des aliments vers l'espace de travail, et le deuxième outil de travail 22 est agencé pour travailler les aliments introduits dans le deuxième conduit de guidage 32. Le premier conduit de guidage 31 et le deuxième conduit de guidage 32 présentent des entrées distinctes. Le deuxième conduit de guidage 32 débouche dans une paroi latérale du premier conduit de guidage 31.

Plus particulièrement dans l'exemple de réalisation illustré sur les figures, le deuxième conduit de guidage 32 est agencé pour guider des aliments vers l'espace de travail selon une deuxième direction présentant au moins une composante normale à l'axe de rotation 31a. Le deuxième conduit de guidage 32 est distinct du premier conduit de guidage 31 mais débouche dans une paroi latérale du premier conduit de guidage 31.

Le dispositif de préparation d'aliments selon l'invention s'utilise et fonctionne de la manière suivante. L'utilisateur démonte la pièce d'alimentation 30 et met en place l'outil de travail 20 souhaité, puis remonte la pièce d'alimentation 30 sur le boîtier 10. Lorsque le premier outil de travail 21 est utilisé, l'utilisateur introduit les aliments à transformer dans le premier conduit de guidage 31 axial. Lorsque le deuxième outil de travail 22 est utilisé, l'utilisateur introduit les aliments à transformer dans le deuxième conduit de guidage 32 non-axial. Le dispositif de préparation d'aliments ainsi obtenu présente une construction et une utilisation particulièrement simples.

Dans l'exemple de réalisation illustré sur les figures, la couronne périphérique 25 du deuxième outil de travail 22 tronconique est identique à la couronne périphérique 25 du premier outil de travail 21 conique. Les outils de travail 20 peuvent ainsi utiliser le même entraîneur.

A titre de variante, le premier outil de travail 21 et le deuxième outil de travail 22 pourraient être entraînés par des entraîneurs distincts. Selon l'invention, le dispositif de préparation d'aliments comporte au moins deux outils de travail 20 amovibles.

A titre de variante, le premier outil de travail 21 n'est pas nécessairement conique. Le premier outil de travail 21 pourrait notamment être formé par une râpe plane ou incurvée.

A titre de variante, le deuxième outil de travail 22 n'est pas nécessairement tronconique. Le deuxième outil de travail 22 pourrait notamment être formé par un tambour cylindrique ou par un disque. Dans le cas d'un disque, le deuxième conduit de guidage 32 non-axial peut si désiré être parallèle au premier conduit de guidage 31 axial.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Dispositif de préparation d'aliments comprenant :
- un boîtier (10) présentant un dispositif d'entraînement,
- au moins deux outils de travail (20) amovibles et interchangeables, chaque outil de travail (20) étant agencé pour être entraîné en rotation par le dispositif d'entraînement autour d'un axe de rotation (31a), lorsque mis en place dans un espace de travail,
- une pièce d'alimentation (30) comprenant un premier conduit de guidage (31) axial agencé pour guider des aliments vers l'espace de travail selon une première direction le long de l'axe de rotation (31a), le premier conduit de guidage (31) axial s'étendant autour de l'axe de rotation (31a),
- les outils de travail (20) comprenant un premier outil de travail (21) agencé pour travailler les aliments introduits dans le premier conduit de guidage (31), le premier outil de travail (21) comprenant au moins une lame de coupe (21b) agencée pour couper en spirale des aliments lorsqu'ils sont introduits par le premier conduit de guidage (31), et un deuxième outil de travail (22) comprenant au moins une portion de coupe (22a),
**caractérisé en ce que** la pièce d'alimentation (30) comprend un deuxième conduit de guidage (32) non-axial agencé pour guider des aliments vers l'espace de travail, le deuxième conduit de guidage (32) non-axial s'étendant hors de l'axe de rotation (31a), et **en ce que** le deuxième outil de travail (22) est agencé pour travailler les aliments introduits par le deuxième conduit de guidage (32) dans l'espace de travail, ladite au moins une portion de coupe (22a) étant agencée sur une génératrice du deuxième outil de travail (22) située en regard du deuxième conduit de guidage (32).

2. Dispositif de préparation d'aliments selon la revendication 1, **caractérisé en ce que** chaque outil de travail (20) comporte une couronne périphérique (25) agencée pour coopérer avec un entraîneur appartenant au dispositif d'entraînement, lorsque ledit outil de travail (20) est mis en place dans l'espace de travail, afin d'entraîner en rotation ledit outil de travail (20).

3. Dispositif de préparation d'aliments selon l'une des revendications 1 ou 2, **caractérisé en ce que** le premier outil de travail (21) est conique avec une partie concave (21a), **en ce que** le premier outil de travail (21) comprend au moins une lame de coupe (21b) agencée dans la partie concave (21a), la lame de coupe (21b) étant agencée pour couper en spirale des aliments lorsqu'ils sont introduits par le premier conduit de guidage (31) dans l'espace de travail et poussés dans la partie concave (21a) du premier outil de travail (21), lorsque le premier outil de travail (21) est mis en place dans l'espace de travail.

4. Dispositif de préparation d'aliments selon les revendications 2 et 3, **caractérisé en ce que** le premier outil de travail (21) conique présente une base (26) formant la couronne périphérique (25).

5. Dispositif de préparation d'aliments selon l'une des revendications 1 à 4, **caractérisé en ce que** le deuxième outil de travail (22) est tronconique, **en ce que** le deuxième outil de travail (22) comprend au moins une portion de coupe (22a) agencée sur une génératrice d'un tronc de cône, pour travailler des aliments lorsqu'ils sont introduits par le deuxième conduit de guidage (32) dans l'espace de travail, lorsque le deuxième outil de travail (22) est mis en place dans l'espace de travail.

6. Dispositif de préparation d'aliments selon la revendication 5, **caractérisé en ce que** le deuxième conduit de guidage (32) est agencé pour guider les aliments à travailler selon une direction perpendiculaire à une génératrice du deuxième outil de travail (22) tronconique située en regard du deuxième conduit de guidage (32).

7. Dispositif de préparation d'aliments selon la revendication 2 et l'une des revendications 5 ou 6, **caractérisé en ce que** le deuxième outil de travail (22) tronconique présente une première base (27) et une deuxième base (28) d'un diamètre supérieur à un diamètre de la première base (27), et **en ce que** la deuxième base (28) comprend la couronne périphérique (25).

8. Dispositif de préparation d'aliments selon la revendication 7 lorsque dépendant de l'une des revendications 2 ou 3, **caractérisé en ce que** la couronne périphérique (25) du deuxième outil de travail (22) tronconique est identique à la couronne périphérique (25) du premier outil de travail (21) conique.

9. Dispositif de préparation d'aliments selon l'une des revendications 1 à 8, **caractérisé en ce que** le deuxième conduit de guidage (32) est agencé pour guider des aliments vers l'espace de travail selon une deuxième direction présentant au moins une composante normale à l'axe de rotation (31a).

10. Dispositif de préparation d'aliments selon l'une des revendications 1 à 9, **caractérisé :**
- **en ce que** le boîtier (10) comprend une interface (18) de fixation de la pièce d'alimentation (30),
- **en ce que** la pièce d'alimentation (30) est agencée pour être montée sur l'interface (18) de manière amovible,
- et **en ce que** l'interface (18) est agencée autour d'un orifice (12) ménagé dans une paroi (11) du boîtier (10) pour faire passer au travers de la paroi (11) les aliments introduits dans la pièce d'alimentation (30) et/ou transformés par l'outil de travail (20).

11. Dispositif de préparation d'aliments selon la revendication 10, **caractérisé en ce que** chaque outil de travail (20) est agencé pour être pris en sandwich entre l'interface (18) et la pièce d'alimentation (30), lorsque la pièce d'alimentation (30) est montée sur l'interface (18).

12. Dispositif de préparation d'aliments selon l'une des revendications 10 ou 11, **caractérisé en ce qu'**il comprend une bavette de déversement (13) agencée en aval de l'orifice (12).

13. Dispositif de préparation d'aliments selon l'une des revendications 1 à 12, **caractérisé en ce que** le boîtier (10) présente une portion d'appui (19) agencée pour définir un plan support (15) sur lequel le dispositif de préparation d'aliments peut reposer.

14. Dispositif de préparation d'aliments selon la revendication 13, **caractérisé en ce que** l'axe de rotation (31a) forme un angle α avec une droite d'intersection (16a) du plan support (15) avec un autre plan (16) perpendiculaire au plan support (15) et comprenant l'axe de rotation (31a), l'angle α étant compris dans une gamme de valeurs allant de 0° à 20°.

15. Dispositif de préparation d'aliments selon la revendication 14 lorsque dépendant de l'une des revendications 5 à 8, **caractérisé en ce que** le deuxième outil de travail (22) tronconique présente un angle de cône dont la valeur est le double de la valeur de l'angle α.

16. Dispositif de préparation d'aliments selon l'une des revendications 13 à 15, **caractérisé en ce que** la portion d'appui (19) définit un empattement, et **en ce que** le dispositif de préparation d'aliments comprend un poussoir agencé pour permettre à un utilisateur de pousser les aliments à travailler dans le deuxième conduit de guidage (32) vers le deuxième outil de travail (22) selon un axe de poussée, et **en ce que** l'axe de poussée présente un point d'intersection avec le plan support (15) situé dans l'empattement.

17. Dispositif de préparation d'aliments selon l'une des revendications 1 à 16, **caractérisé en ce que** le boîtier (10) loge un moteur électrique agencé pour entraîner en rotation l'outil de travail (20) mis en place dans l'espace de travail, par l'intermédiaire du dispositif d'entraînement.

18. Dispositif de préparation d'aliments selon les revendications 16 et 17, **caractérisé en ce que** le boîtier (10) comprend un bouton de commande (14) agencé pour mettre le moteur électrique en fonctionnement, **en ce que** le bouton de commande (14) est du type à appui maintenu selon une direction d'appui, et **en ce que** la direction d'appui présente un point d'intersection avec le plan support (15) situé dans l'empattement.

## Patentansprüche

1. Vorrichtung zur Herstellung von Nahrungsmitteln, umfassend:
- ein Gehäuse (10), das eine Antriebsvorrichtung aufweist,
- mindestens zwei abnehmbare und austauschbare Arbeitswerkzeuge (20), wobei jedes Arbeitswerkzeug (20) dazu vorgesehen ist, in Drehung von der Antriebsvorrichtung um eine Drehachse (31a) angetrieben zu werden, wenn es in einem Arbeitsbereich angeordnet ist,
- ein Zuführteil (30), umfassend eine erste axiale Führungsleitung (31), die dazu vorgesehen ist, Nahrungsmittel zu dem Arbeitsbereich in eine erste Richtung entlang der Drehachse (31a) zu führen, wobei sich die erste axiale Führungsleitung (31) um die Drehachse (31a) erstreckt,
- die Arbeitswerkzeuge (20), umfassend ein erstes Arbeitswerkzeug (21), das dazu vorgesehen ist, die in die erste Führungsleitung (31) eingeführten Nahrungsmittel zu bearbeiten, wobei das erste Arbeitswerkzeug (21) mindestens ein Schneidmesser (21b) umfasst, das dazu vorgesehen ist, die Nahrungsmittel spiralförmig zu schneiden, wenn sie durch die erste Führungsleitung (31) eingeführt werden, und ein zweites Arbeitswerkzeug (22), umfassend mindestens einen Schneidabschnitt (22a),
- **dadurch gekennzeichnet, dass** das Zuführteil (30) eine zweite nicht axiale Führungsleitung (32) umfasst, die dazu vorgesehen ist, Nahrungsmittel zu dem Arbeitsbereich zu führen, wobei sich die zweite nicht axiale Führungsleitung (32) außerhalb der Drehachse (31a) erstreckt, und dass das zweite Arbeitswerkzeug (22) dazu vorgesehen ist, die durch die zweite Führungsleitung (32) in den Arbeitsbereich eingeführten Nahrungsmittel zu bearbeiten, wobei der mindestens eine Schneidabschnitt (22a) auf einer Mantellinie des zweiten Arbeitswerkzeugs (22) angeordnet ist, die sich gegenüber der zweiten Führungsleitung (32) befindet.

2. Vorrichtung zur Herstellung von Nahrungsmitteln nach Anspruch 1, **dadurch gekennzeichnet, dass** jedes Arbeitswerkzeug (20) einen Umfangskranz (25) umfasst, der dazu vorgesehen ist, mit einem Antriebselement, das der Antriebsvorrichtung angehört, zusammenzuwirken, wenn das Arbeitswerkzeug (20) in dem Arbeitsbereich angeordnet ist, um das Arbeitswerkzeug (20) in Drehung anzutreiben.

3. Vorrichtung zur Herstellung von Nahrungsmitteln nach einem der Ansprüche 1 oder 2, **dadurch gekennzeichnet, dass** das erste Arbeitswerkzeug (21) konisch mit einem konkaven Teil (21a) ist, dass das erste Arbeitswerkzeug (21) mindestens ein Schneidmesser (21b) umfasst, das in dem konkaven Teil (21a) angeordnet ist, wobei das Schneidmesser (21b) dazu vorgesehen ist, Nahrungsmittel spiralförmig zu schneiden, wenn sie durch die erste Führungsleitung (31) in den Arbeitsbereich eingeführt und in den konkaven Teil (21a) des ersten Arbeitswerkzeugs (21) geschoben werden, wenn das erste Arbeitswerkzeug (21) in dem Arbeitsbereich angeordnet ist.

4. Vorrichtung zur Herstellung von Nahrungsmitteln nach den Ansprüchen 2 und 3, **dadurch gekennzeichnet, dass** das erste konische Arbeitswerkzeug (21) eine Basis (26) aufweist, die den Umfangskranz (25) bildet.

5. Vorrichtung zur Herstellung von Nahrungsmitteln nach einem der Ansprüche 1 bis 4, **dadurch gekennzeichnet, dass** das zweite Arbeitswerkzeug (22) kegelstumpfartig ist, dass das zweite Arbeitswerkzeug (22) mindestens einen Schneidabschnitt (22a) umfasst, der auf einer Mantellinie eines Kegelstumpfes angeordnet ist, um Nahrungsmittel zu bearbeiten, wenn sie durch die zweite Führungsleitung (32) in den Arbeitsbereich eingeführt werden, wenn das zweite Arbeitswerkzeug (22) in dem Arbeitsbereich angeordnet ist.

6. Vorrichtung zur Herstellung von Nahrungsmitteln nach Anspruch 5, **dadurch gekennzeichnet, dass** die zweite Führungsleitung (32) dazu vorgesehen ist, die zu bearbeitenden Nahrungsmittel in eine Richtung senkrecht auf eine Mantellinie des zweiten kegelstumpfartigen Arbeitswerkzeugs (22), die sich gegenüber der zweiten Führungsleitung (32) befindet, zu führen.

7. Vorrichtung zur Herstellung von Nahrungsmitteln nach Anspruch 2 und einem der Ansprüche 5 oder 6, **dadurch gekennzeichnet, dass** das zweite kegelstumpfartige Arbeitswerkzeug (22) eine erste Basis (27) und eine zweite Basis (28) mit einem größeren Durchmesser als die erste Basis (27) aufweist, und dass die zweite Basis (28) den Umfangskranz (25) umfasst.

8. Vorrichtung zur Herstellung von Nahrungsmitteln nach Anspruch 7, wenn von einem der Ansprüche 2 oder 3 abhängig, **dadurch gekennzeichnet, dass** der Umfangskranz (25) des zweiten kegelstumpfartigen Arbeitswerkzeugs (22) mit dem Umfangskranz (25) des ersten konischen Arbeitswerkzeugs (21) identisch ist.

9. Vorrichtung zur Herstellung von Nahrungsmitteln nach einem der Ansprüche 1 bis 8, **dadurch gekennzeichnet, dass** die zweite Führungsleitung (32) dazu vorgesehen ist, Nahrungsmittel zu dem Arbeitsbereich in eine zweite Richtung zu führen, die mindestens eine Komponente normal auf die Drehachse (31a) aufweist.

10. Vorrichtung zur Herstellung von Nahrungsmitteln nach einem der Ansprüche 1 bis 9, **dadurch gekennzeichnet, dass**:
- das Gehäuse (10) eine Schnittstelle (18) zur Befestigung des Zuführteils (30) umfasst,
- das Zuführteil (30) dazu vorgesehen ist, auf der Schnittstelle (18) abnehmbar montiert zu werden,
- die Schnittstelle (18) um eine Öffnung (12) angeordnet ist, die in einer wand (11) des Gehäuses (10) vorgesehen ist, um durch die Wand (11) die in das Zuführteil (30) eingeführten und/oder von dem Arbeitswerkzeug (20) bearbeiteten Nahrungsmittel durchzuführen.

11. Vorrichtung zur Herstellung von Nahrungsmitteln nach Anspruch 10, **dadurch gekennzeichnet, dass** jedes Arbeitswerkzeug (20) dazu vorgesehen ist, zwischen der Schnittstelle (18) und dem Zuführteil (30) eingespannt zu sein, wenn das Zuführteil (30) auf der Schnittstelle (18) montiert ist.

12. Vorrichtung zur Herstellung von Nahrungsmitteln nach einem der Ansprüche 10 oder 11, **dadurch gekennzeichnet, dass** sie eine Einschüttklappe (13) umfasst, die stromabwärts zur Öffnung (12) angeordnet ist.

13. Vorrichtung zur Herstellung von Nahrungsmitteln nach einem der Ansprüche 1 bis 12, **dadurch gekennzeichnet, dass** das Gehäuse (10) einen Auflageabschnitt (19) aufweist, der dazu vorgesehen ist, eine Tragfläche (15) zu definieren, auf der die Vorrichtung zur Herstellung von Nahrungsmitteln aufliegen kann.

14. Vorrichtung zur Herstellung von Nahrungsmitteln nach Anspruch 13, **dadurch gekennzeichnet, dass** die Drehachse (31a) einen Winkel α mit einer Schnittgeraden (16a) der Tragfläche (15) mit einer weiteren Fläche (16) senkrecht auf die Tragfläche (15) und umfassend die Drehachse (31a) bildet, wobei der Winkel α in einem Wertebereich von 0° bis 20° enthalten ist.

15. Vorrichtung zur Herstellung von Nahrungsmitteln nach Anspruch 14, wenn von einem der Ansprüche 5 bis 8 abhängig, **dadurch gekennzeichnet, dass** das zweite kegelstumpfartige Arbeitswerkzeug (22) einen Kegelwinkel aufweist, dessen Wert das Doppelte des Werts des Winkels α ist.

16. Vorrichtung zur Herstellung von Nahrungsmitteln nach einem der Ansprüche 13 bis 15, **dadurch gekennzeichnet, dass** der Auflageabschnitt (19) eine Spannweite definiert, und dass die Vorrichtung zur Herstellung von Nahrungsmitteln einen Schieber umfasst, der dazu vorgesehen ist, es einem Benutzer zu ermöglichen, die zu bearbeitenden Nahrungsmittel in die zweite Führungsleitung (32) zu dem zweiten Arbeitswerkzeug (22) entlang einer Schubachse zu schieben, und dass die Schubachse einen Schnittpunkt mit der Tragfläche (15) aufweist, der sich in der Spannweite befindet.

17. Vorrichtung zur Herstellung von Nahrungsmitteln nach einem der Ansprüche 1 bis 16, **dadurch gekennzeichnet, dass** das Gehäuse (10) einen Elektromotor aufnimmt, der dazu vorgesehen ist, das Arbeitswerkzeug (20), das in dem Arbeitsbereich angeordnet ist, mit Hilfe der Antriebsvorrichtung in Drehung anzutreiben.

18. Vorrichtung zur Herstellung von Nahrungsmitteln nach den Ansprüchen 16 und 17, **dadurch gekennzeichnet, dass** das Gehäuse (10) einen Steuerknopf (14) umfasst, der dazu vorgesehen ist, den Elektromotor in Betrieb zu setzen, und dass der Steuerknopf (14) zum Drücken, gehalten in eine Drückrichtung, ist, und dass die Drückrichtung einen Schnittpunkt mit der Tragfläche (15), die sich in der Spannweite befindet, aufweist.

## Claims

1. Food preparation device comprising:
- a housing (10) with a drive device,
- at least two removable and interchangeable working tools (20), each working tool (20) being arranged to be driven in rotation by the drive device around a rotation axis (31a) when placed in a work space,
- a feed part (30) comprising a first axial guide conduit (31) laid out to guide food towards the work space along a first direction along the rotation axis (31a), the first axial guide conduit (31) extending around the rotation axis (31a),
- the working tools (20) comprising a first working tool (21) arranged to work the food introduced into the first guide conduit (31), the first working tool (21) comprising at least one cutting blade (21b) arranged to cut food spirally when it is introduced through the first guide conduit (31) and a second working tool (22) comprising at least one cutting portion (22a),
**characterised in that** the feed part (30) comprises a second non-axial guide conduit (32) arranged to guide food towards the work space, the second non-axial guide conduit (32) extending away from the rotation axis (31a), and **in that** the second working tool (22) is arranged to work the food introduced through the second guide conduit (32) into the work space, said at least one cutting portion (22a) being arranged on a generating line of the second working tool (22) located facing the second guide conduit (32).

2. Food preparation device according to claim 1, **characterised in that** each working tool (20) comprises a peripheral ring (25) arranged to cooperate with a drive element belonging to the drive device, when said working tool (20) is put into place in the work space, so as to drive said working tool (20) in rotation.

3. Food preparation device according to either claim 1 or 2, **characterised in that** the first working tool (21) is conical with a concave part (21a), **in that** the first working tool (21) comprises at least one cutting blade (21b) arranged in the concave part (21a), the cutting blade (21b) being arranged to cut food spirally when it is introduced through the first guide conduit (31) into the work space and pushed into the concave part (21a) of the first working tool (21) when the first working tool (21) is placed in the work space.

4. Food preparation device according to claims 2 and 3, **characterised in that** the first conical working tool (21) has a base (26) forming the peripheral ring (25).

5. Food preparation device according to any one of claims 1 to 4, **characterised in that** the second working tool (22) is in the form of a truncated cone, and **in that** the second working tool (22) comprises at least one cutting portion (22a) arranged on a generating line of a truncated cone, to work food when it is introduced through the second guide conduit (32) into the work space, when the second working tool (22) is put into place in the work space.

6. Food preparation device according to claim 5, **characterised in that** the second guide conduit (32) is arranged to guide food to be worked along a direction perpendicular to a generating line of the second truncated cone shaped working tool (22) located facing the second guide conduit (32).

7. Food preparation device according to claim 2 and one of claims 5 and 6, **characterised in that** the second truncated cone shaped working tool (22) has a first base (27) and a second base (28) with a diameter larger than the diameter of the first base (27) and **in that** the second base (28) comprises the peripheral ring (25).

8. Food preparation device according to claim 7 when dependent on one of claims 2 or 3, **characterised in that** the peripheral ring (25) of the second truncated cone shaped working tool (22) is identical to the peripheral ring (25) of the first conical working tool (21).

9. Food preparation device according to one of claims 1 to 8, **characterised in that** the second guide duct (32) is arranged to guide food towards the work space along a second direction with at least one component normal to the rotation axis (31a).

10. Food preparation device according to one of claims 1 to 9, **characterised:**
- **in that** the box (10) comprises an interface (18) for attachment of the feed part (30),
- **in that** the feed part (30) is arranged to be removably mounted on the interface 18,
- **in that** the interface (18) is arranged around an orifice (12) formed in a wall (11) of the box (10) to pass through the wall (11) food introduced into the feed part (30) and/or transformed by the working tool (20).

11. Food preparation device according to claim 10, **characterised in that** each working tool (20) is arranged to be sandwiched between the interface (18) and the feed part (30), when the feed part (30) is mounted on the interface (18).

12. Food preparation device according to either claim 10 or 11, **characterised in that** it comprises a discharge spout (13) arranged downstream from the orifice (12).

13. Food preparation device according to one of claims 1 to 12, **characterised in that** the box (10) has a bearing portion (19) arranged to define a support plane (15) on which the food preparation device can be supported.

14. Food preparation device according to claim 13, **characterised in that** the rotation axis (31a) is at an angle α from a straight line (16a) along the intersection of the support plane (15) with another plane (16) perpendicular to the support plane (15) and comprising the axis of rotation (31a), the angle α being within a range of values between 0° and 20°.

15. Food preparation device according to claim 14 when dependent on one of claims 5 to 8, **characterised in that** the second truncated cone shaped working tool (22) has a cone angle for which the value is equal to twice the value of the angle a.

16. Food preparation device according to one of claims 13 to 15, **characterised in that** the bearing portion (19) defines a footprint, and **in that** the food preparation device comprises a pusher to enable a user to push food to be worked into the second guide conduit (32) towards the second working tool (22) along a pusher axis, and **in that** the pusher axis has an intersection point with the support plane (15) located within the footprint.

17. Food preparation device according to one of claims 1 to 16, **characterised in that** the housing (10) houses an electric motor arranged to drive the working tool (20) placed in the work space in rotation, through the drive device.

18. Food preparation device according to claims 16 and 17, **characterised in that** the housing (10) comprises a control button (14) arranged to put the electric motor into operation, **in that** the control button (14) is of the continuous press type along a push direction, and **in that** the push direction has an intersection point with the support plane (15) located within the footprint.
